Europäisches Patentamt

European Patent Office

Office européen des brevets

(19)

(11) Veröffentlichungsnummer: **0 307 700 B1**

(12) **EUROPÄISCHE PATENTSCHRIFT**

(45) Veröffentlichungstag der Patentschrift: **04.03.92**

(51) Int. Cl.⁵: **B01D 33/15**

(21) Anmeldenummer: **88114036.2**

(22) Anmeldetag: **29.08.88**

(54) **Scheibeneindicker.**

(30) Priorität: **16.09.87 DE 3730990**

(43) Veröffentlichungstag der Anmeldung:
**22.03.89 Patentblatt 89/12**

(45) Bekanntmachung des Hinweises auf die
Patenterteilung:
**04.03.92 Patentblatt 92/10**

(84) Benannte Vertragsstaaten:
**AT BE CH DE ES FR GB GR IT LI LU NL SE**

(56) Entgegenhaltungen:
**DE-A- 3 235 003**
**DE-C- 205 814**
**FR-A- 1 556 104**

(73) Patentinhaber: **ANDREAS KUFFERATH KG**
**Andreas-Kufferath-Platz**
**W-5160 Düren-Mariaweiler(DE)**

(72) Erfinder: **Krieger, Uwe, Dr.**
**Engelbert, Nyt-Strasse 6**
**W-5160 Düren(DE)**

(74) Vertreter: **Schumacher, Bernd, Dipl.-Ing.**
**Am Schwaberg 13**
**W-6450 Hanau 6(DE)**

## Beschreibung

Die Erfindung betrifft einen Scheibeneindicker gemäß dem Oberbegriff von Anspruch 1.

Bei einem solchen Scheibeneindicker gemäß der DE-OS 32 35 003 strömt die einzudickende Suspension über einen Stoffverteiler in einzelne von dem stationären Trog begrenzte Suspensionskammern zwischen jeweils zwei mit Siebgewebe bespannten Scheiben, die nachfolgend als Siebfilterscheiben bezeichnet werden und sich mit einer Welle drehen. Die Suspension entwässert durch die Siebgewebe, und der eingedickte Stoff wird durch die Rotation der Siebfilterscheiben auf der dem Zulauf gegenüberliegenden Seite ausgeworfen. Die Entwässerung der Suspension erfolgt ausschließlich aufgrund des hydrostatischen Druckunterschiedes zwischen der Suspensions- bzw. Dickstoffkammer und der vom Trog begrenzten (im übrigen wie die Suspensionskammer nach oben zur atmosphärischen Umgebung offenen) Filtrat- bzw. Klarwasserkammer. Das Suspensionsniveau in den Suspensionskammern erstreckt sich etwa bis zur Drehachse der Welle.

Der vorliegenden Erfindung liegt die Aufgabe zugrunde, einen Scheibeneindicker der im Oberbegriff genannten Art mit einfachen Maßnahmen so zu gestalten, daß er eine einwandfreie Trennung des Filtrats, zumindest in Primär- bzw. Trübfiltrat und Klarfiltrat, ermöglicht.

Im Rahmen der Erfindung wurde festgestellt, daß sich bei dem Scheibeneindicker gemäß Oberbegriff das Filtrat aus dem sogenannten Primärfiltrat und dem Klarfiltrat zusammensetzt. Das Primärfiltrat ist der Anteil, der durch das Siebgewebe fließt, so lange dieses noch nicht mit einer Faserschicht belegt ist. Die Stoffdichte des Primärfiltrats ist insbesondere bei Suspensionen mit großem Feinstoffanteil naturgemäß relativ groß. Das Klarfiltrat ist der Anteil des Klarwassers, der durch die gebildete Faserschicht fließt. Die Stoffdichte des Klarfiltrats ist daher sehr klein. Die verschiedenen Filtratarten können für unterschiedliche Zwecke verwendet werden. Beispielsweise kann das Primär- bzw. Trübfiltrat in die Suspensionskammern zurückgeführt werden, während das Klarfiltrat für Spritzzwecke oder dergleichen eingesetzt werden kann.

Zur Lösung der gestellten Aufgabe werden deshalb bei einem Scheibeneindicker der im Oberbegriff von Anspruch 1 genannten Art erfindungsgemäß die im Kennzeichen dieses Anspruchs aufgeführten Merkmale vorgeschlagen. Die zur Realisierung der Filtrattrennung erforderlichen Maßnahmen sind ausgesprochen einfach und erfordern lediglich die Querwände in der Filtratkammer sowie mehrere getrennte Ablaufabschnitte des Filtratablaufs. Infolge der einzelnen Filtratkammerabschnitte wird das je nach Drehposition jeweils anfallende Filtrat, anfänglich Primärfiltrat und später Klarfiltrat zunehmender Reinheit, in den zugehörigen Ablaufabschnitt geleitet. Die Querwände sorgen dafür, daß in Abhängigkeit von ihrer Anzahl und Ausbildung ein Durchmischen der verschiedenen Filtratarten zumindest erschwert wird. Lediglich dann, wenn ein Filtratkammerabschnitt gleichzeitig benachbarte Ablaufabschnitte überstreicht, liegt keine exakte Zuordnung vor. Abgesehen davon läßt sich aber mit den beschriebenen einfachen Maßnahmen eine hinreichend genaue Filtrattrennung erzielen.

Die Weiterbildung von Anspruch 2 sorgt dafür, daß die einzelnen Filtratkammerabschnitte besser gegeneinander abgedichtet sind und somit eine genauere Filtrattrennung erzielbar ist. Ohne eine solche Abdichtung könnte das Filtrat von einem Filtratkammerabschnitt in den angrenzenden Filtratkammerabschnitt und damit in einen anderen Ablaufabschnitt übertreten.

Mit der Weiterbildung von Anspruch 3 wird erzielt, daß pro Umlauf eine langzeitige, ununterbrochene und somit äußerst wirksame Entwässerungsmöglichkeit besteht.

Mit der Weiterbildung von Anspruch 4 kann der gerätetechnische Aufwand durch Zusammenfassen gleichartiger Ablaufabschnitte drastisch reduziert werden.

Die Weiterbildung von Anspruch 5 ermöglicht mit einfachen Maßnahmen eine Anpassung der Umfangslänge der Ablaufabschnitte an die jeweiligen Betriebsverhältnisse, beispielsweise an die jeweilige Art der zu entwässernden Suspension. Beispielsweise kann es bei Suspensionen mit großem Faserstoffanteil sinnvoll sein, die Umfangslänge des anfänglichen Ablaufabschnitts für Primär- bzw. Trübfiltrat zu vergrößern.

Die Weiterbildung von Anspruch 6 ermöglicht eine gerätetechnisch sehr einfache Verstellbarkeit der Umfangslänge der Ablaufabschnitte.

Mit der Weiterbildung von Anspruch 7 kann eine bedarfsgerechte Filtrattrennung- und -steuerung vorgenommen werden. Dabei kann der eine oder andere Ablaufabschnitt, beispielsweise der mittlere von drei Ablaufabschnitten, gesperrt werden, damit die Filtratkammerabschnitte nicht gleichzeitig mehrere wirksame Ablaufabschnitte überstreichen.

Die Weiterbildungen der Ansprüche 8 und 9 stellen eine pro Umlauf des Scheibeneindickers langzeitige bzw. hochwirksame Entwässerung der Suspension sicher.

Die Weiterbildung von Anspruch 10 erlaubt eine einfache konstruktive Gestaltung in Verbindung mit einer guten Filtrattrennbarkeit, da die einzelnen Filtratkammerabschnitte insgesamt durch die Querwände unterteilt sind.

Mit der Weiterbildung von Anspruch 11 läßt

2

sich auf einfache Weise die gegenseitige Abdichtung benachbarter Filtratkammerabschnitte erzielen. Dieses begünstigt die Filtrattrennung.

Die Weiterbildung von Anspruch 12 stellt eine Alternative zu derjenigen aus Anspruch 11 dar und genügt für viele Anwendungsfälle, da das Filtrat nur relativ langsam durch die engen Spalte strömen kann und insoweit eine Art Flüssigkeitsabdichtung besteht.

Die Weiterbildung von Anspruch 13 berücksichtigt die Tatsache, daß im allgemeinen mehr Klarfiltrat als Primär- bzw. Trübfiltrat anfällt bzw. daß die Siebscheiben beim Eintauchen in die Suspension relativ schnell mit Faserstoffen belegt sind.

Die Weiterbildungen der Ansprüche 14 bis 16 ermöglichen eine Anpassung der Filtrattrennbarkeit an die jeweiligen Betriebserfordernisse. Je mehr Querwände vorhanden sind, das heißt je kleiner der Umfangswinkel der einzelnen Filtratkammerabschnitte ist, desto besser ist die Filtrattrennung. Die angegebenen Zahlen stellen einen praktikablen Kompromiß mit dem filtrattechnischen Nutzen und dem konstruktiven Aufwand dar.

Die Weiterbildung von Anspruch 17 beinhaltet eine praktikable Ausführungsform, z. B. in Verbindung mit acht Querwänden und einer Unterdruckbeaufschlagung.

Mit der Weiterbildung von Anspruch 19 läßt sich stets eine derartige Bemessung finden, die eine praktikable Unterdruckbeaufschlagung ermöglicht.

Die Erfindung wird nachfolgend an zeichnerisch dargestellten Ausführungsbeispielen näher erläutert. Es zeigen:

Figur 1 - einen Scheibeneindicker nach einer ersten Ausführungsform in einem schematischen Querschnitt,

Figur 2 - den Scheibeneindicker aus Figur 1 in einem schematischen Teil- bzw. Längsschnitt und

Figur 3 - einen Teil eines Scheibeneindickers nach einer zweiten Ausführungsform in einem schematischen Teil- bzw. Querschnitt.

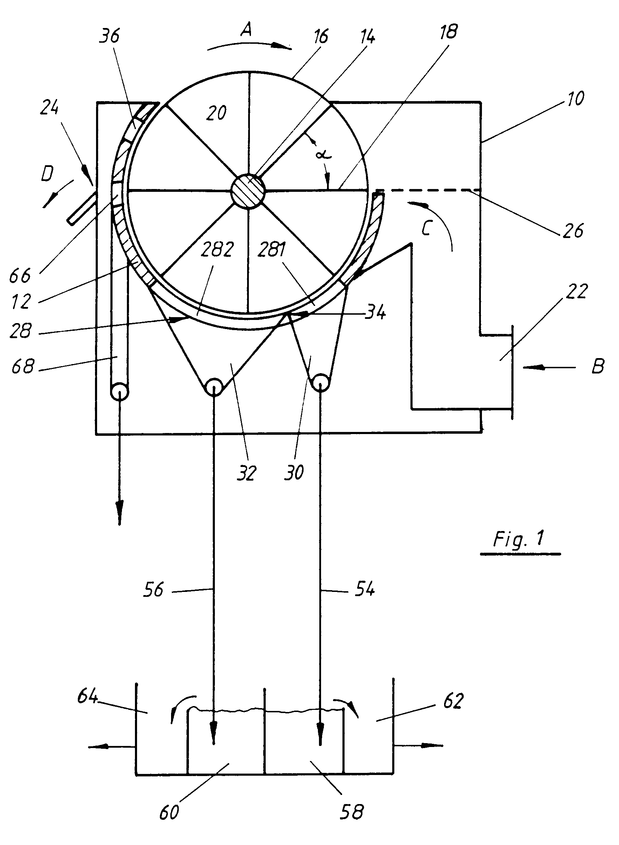

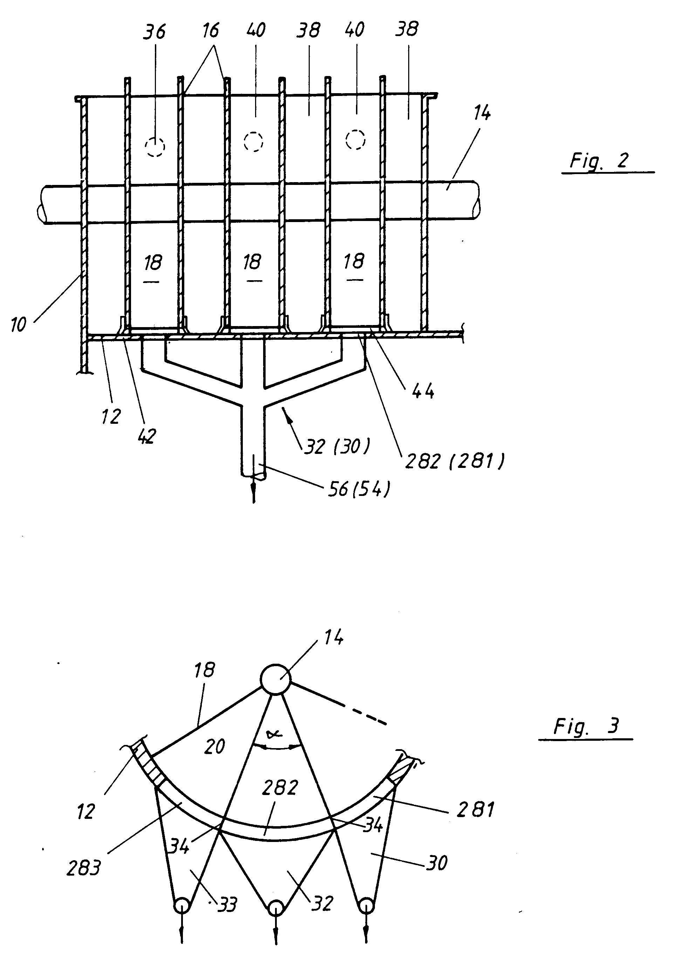

Gemäß den Figuren 1 und 2 hat der Scheibeneindicker ein Gehäuse 10 mit einem stationären zylindrischen Trog 12, in dem sich eine Welle 14 mit mehreren daran befestigten, gegenseitig beabstandeten Siebfilterscheiben 16 dreht. Diese sind an ihrem Umfang gegenüber dem Trog 12 abgedichtet, beispielsweise mittels elastischer Dichtlippen 42, die an den Siebfilterscheiben 16 befestigt sind und am Trog 12 bzw. an hieran befindlichen Dichtkanten abdichtend entlanggleiten.

Der Troginnenraum wird durch die Siebfilterscheiben 16 entlang der Welle 14 abwechselnd in Suspensionskammern 38, in denen sich die Dichtlippen 42 befinden, und Filtratkammern 40 unterteilt. Die letzteren werden durch radial und axial verlaufende Querwände 18 in einzelne zum Trog 12 offene Filtratkammerabschnitte 20 unterteilt. Im vorliegenden Fall sind die Querwände 18 jeweils an der Welle 14 und an zwei Siebfilterscheiben 16 befestigt. Sie sind in sich eben und erstrecken sich radial auswärts, so daß sich zwischen ihren äußeren Rändern und dem Trog 12 nur enge Spalte ergeben (siehe Figur 1).

Die Siebfilterscheiben 16 können mit einem Siebgewebe bespannte Scheiben sein und dienen der Entwässerung einer Suspension, die den Suspensionskammern 38 über einen Suspensionszulauf 22 und einen Suspensionsverteiler an einer Seite des Scheibeneindickers zugeführt wird. Die Suspension strömt in Pfeilrichtung B und C bis zum Suspensionsniveau 26 (der Trog 12 ist etwa bis zur Drehachse bzw. bis zur Welle 14 gefüllt), um in die Suspensionskammern 38 zwischen den Entwässerungs- bzw. Siebfilterscheiben 16 einzuströmen. Die letzteren drehen sich mit der Welle 14 in Pfeilrichtung A, so daß der entwässerte Dickstoff aus den Suspensionskammern 38 an der entgegengesetzte Seite des Scheibeneindickers über Suspensionsabläufe 24 in Pfeilrichtung D aus dem Scheibeneindicker austreten kann. Unterhalb des Suspensionsniveaus 26 entwässert die Suspension über die Siebfilterscheiben 16, und das dadurch entstehende Filtrat strömt aus den Filtratkammern 40 bzw. Filtratkammerabschnitten 20 über einen im vorliegenden Fall in Umfangsrichtung langgestreckten, in Ablaufabschnitte 281, 282 unterteilten Filtratablauf 28 im Trogboden. Das Filtrat gelangt einerseits über den Ablaufabschnitt 281 für Primär- bzw. Trübfiltrat in eine umfangsmäßig vordere Sammelleitung 30 und andererseits über den Ablaufabschnitt 282 für Klarfiltrat in eine umfangsmäßig nachfolgende Sammelleitung 32, die von der Sammelleitung 30 durch eine vorzugsweise in Umfangsrichtung des Eindickers verstellbare Trennwand 34 abgetrennt ist.

Gemäß Figur 2 befinden sich an den äußeren Rändern der Querwände 18 sich über deren Länge erstreckende Dichtleisten 44, wie elastische Dichtlippen, die den engen Spalt zwischen den Querwänden 18 und dem Trog 12 abdichtend überbrücken. Sie können somit die sich in Strömungseingriff mit dem Filtratablauf 28 befindlichen Filtratkammerabschnitte 20 umfangsmäßig abdichten, so weit sich die Dichtleisten 44 nicht im unmittelbaren Bereich des Filtratablaufs 28 befinden.

Alternativ kann es auch genügen, wenn statt der Dichtleisten 44 sehr kleine Spalte zwischen den äußeren Rändern der Querwände 18 und dem Trog 12 vorhanden sind. Das Filtrat kann dann nicht ausreichend schnell durch diese Spalte abfließen, so daß jeder Filtratrückstau als umfangsmäßige Flüssigkeitsabdichtung fungiert.

Die Querwände 18 führen in Verbindung mit der Unterteilung des Filtratablaufs 28 in mehrere Ablaufabschnitte 281, 282 (es können auch mehr als zwei Ablaufabschnitte vorhanden sein) zu einer wirksamen Filtrattrennbarkeit. Gleichzeitig wird hierdurch die Möglichkeit eröffnet, daß der Filtratablauf, entweder alle oder einzelne Ablaufabschnitte, zur Beschleunigung der Entwässerung mit Unterdruck beaufschlagt wird, was noch näher erläutert wird.

Sobald die Filtratkammerabschnitte 20 unter das Suspensionsniveau 26 gelangen, beginnt die Entwässerung. Sobald sie aus dem Suspensionsniveau 26 auftauchen, können sie über Anschlüsse 36 mit einem pneumatischen Druckstoß beaufschlagt werden, um die sich auf der Seite der Suspensionskammern 38 an den Siebfilterscheiben 16 abgesetzten Faserstoffe hiervon noch wirksamer als durch blosses schwerkraftbedingtes Abschälen zu lösen, also die Siebfilterscheiben 16 zu reinigen. Hierzu ist im vorliegenden Fall der zylindrische Trog 12 auf der Seite des Suspensionsablaufes 24 nach oben verlängert, so daß der sich jeweils in diesem Bereich befindliche Filtratkammerabschnitt 20 ähnlich wie im Bereich des Trogbodens zumindest teilweise abgedichtet ist, um den Druckstoß aufbringen zu können. Alternativ oder zusätzlich ist es auch möglich, in den Suspensionskammern 38 mechanische Schaber oder schräggestellte, abschälende Spritzdüsen vorzusehen.

Falls zusätzlich zu der bloßen Filtrattrennung auch eine beschleunigende Unterdruckbeaufschlagung erwünscht ist, können die Sammelleitungen 30, 32 mit Saugpumpen oder gemäß Figur 1 mit Fallrohren 54, 56 ausreichend großer Länge (z. B. 5 bis 8 m) und genügend kleinem Strömungsquerschnitt (damit der unterdruckerzeugende Flüssigkeitsstrom möglichst nicht abreißt) verbunden werden. Die Fallrohre greifen in filtratgefüllte Tauchbecken 58, 60 ein, aus denen das Filtrat in Sammelbecken 62, 64 (mit Abläufen) überströmt. Diese Unterdruckerzeugung ist besonders einfach (da Pumpen entfallen) und unanfällig. Selbst nach Unterbrechung des Betriebsablaufes stellt sich der Unterdruck nach Aufbau der Flüssigkeitssäule im Fallrohr 54, 56 selbsttätig wieder ein.

Gemäß Figur 1 ist der Trog 12 etwa auf dem Niveau der Welle 14 ablaufseitig mit einem Superklarfiltrat-Ablauf 66 versehen, aus dem noch saubereres Klarfiltrat über ein Ablaufrohr 68 abströmen kann.

Der Umfangswinkel $\alpha$ der Filtratkammerabschnitte 20 sollte **maximal** etwa 60 Grad betragen und beträgt gemäß Darstellung etwa 45 Grad. Im Falle einer Unterdruckbeaufschlagung beträgt dann der Umfangswinkel des gesamten Filtratablaufs 28 bei bis zur Welle 14 reichendem Suspensionsniveau 26 maximal 180° - 2.$\alpha$, also 60 Grad bzw. 90 Grad. Auf diese Weise lassen sich eine pro Umlauf langzeitige bzw. wirksame Entwässerung (mit Unterdruck) und eine gute Filtrattrennung erzielen. Für eine noch feinere Filtrattrennung können beispielsweise zwölf bis 24 Querwände 18 eingesetzt werden.

Aus Figur 2 ist ersichtlich, daß die Sammelleitungen 30 bzw. 32 der Ablaufabschnitte 281 bzw. 282 benachbarter Filtratkammern 40 miteinander verbunden sind.

Figur 3 zeigt eine Ausführungsvariante mit drei Ablaufabschnitten 281, 282, 283 und entsprechend drei separaten Sammelleitungen 30, 32, 33. Dabei können die Ablaufabschnitte 282, 283 solche für Klarfiltrat unterschiedlicher Reinheit sein. Die Trennwände 34 können ebenfalls in Umfangsrichtung verstellbar sein.

In Figur 3 wurde der Umfangswinkel der Filtratkammerabschnitte 20 beispielhaft so gewählt, daß diese nicht gleichzeitig die Ablaufabschnitte 281 und 283 überstreichen. Dieses kann zu gewissen betriebstechnischen Vorteilen hinsichtlich der Filtrattrennung und auch der Unterdruckbeaufschlagung führen. Wenn beispielsweise ventilgesteuerte Sammelleitungen vorhanden sind und die mittlere Sammelleitung 32 geschlossen wird, liegt eine unterdruck- und filtratmäßige Trennung zwischen den übrigen Ablaufabschnitten vor. Alternativ könnte der Ablaufabschnitt 282 auch durch eine Zwischenwandung des Trogs 12 ersetzt werden.

Es ist ersichtlich, daß einerseits die Filtrattrennung und andererseits die erst durch die Querwände ermöglichte Unterdruckbeaufschlagung um so besser arbeiten, je mehr Querwände vorhanden sind. Andererseits muß deren Anzahl aus Kosten- und konstruktiven Gründen z. B. auf 6 bis 24 beschränkt werden. Die dargestellte Anzahl von 8 Querwänden hat sich in Verbindung mit einem Filtratablauf bewährt, der einen gesamten Umfangswinkel von 90 Grad hat. Diese Bauform gewährleistet einerseits eine ausreichende Filtrattrennbarkeit und andererseits die Möglichkeit einer zusätzlichen Unterdruckbeaufschlagung zur Beschleunigung des Entwässerungsvorgangs.

**Patentansprüche**

1.  Scheibeneindicker mit wenigstens einer in einem stationären Trog (12) drehbar gelagerten, zur Entwässerung einer Faserstoff-Suspension dienenden Siebfilterscheibe (16) an einer im wesentlichen horizontal angeordneten, antreibbaren Welle (14), vorzugsweise mit mehreren gegenseitig axial beabstandeten Siebfilterscheiben, die jeweils an ihrem Umfang gegen den Trog abgedichtet sind und eine zum Trog offene, hiervon begrenzte Suspensionskammer (38) von einer zum Trog offenen, hiervon begrenzten Filtratkammer (40) trennen, wobei jede Suspensionskammer an einer Trogseite einen Suspensionszulauf (22) sowie an der gegenüberliegenden Trogseite einen Suspensionsablauf (24) und jede Filtratkammer im Trogboden einen Filtratablauf (28) aufweisen, **dadurch gekennzeichnet,**
daß jede Filtratkammer (40) durch an der Welle (14) und/oder an der oder den Siebfilterscheiben (16) befestigte Querwände (18) in mehrere umfangsmäßig verteilte Filtratkammerabschnitte (20) unterteilt ist und daß der bodenseitige Filtratablauf (28) mindestens zwei in Umfangsrichtung des Trogs (12) hintereinander angeordnete, ablaufseitig voneinander getrennte Ablaufabschnitte (281, 282, 283) für Filtrat mit in Drehrichtung der Filtratkammerabschnitte zunehmender Reinheit aufweist.

2. Scheibeneindicker nach Anspruch 1, dadurch gekennzeichnet, daß die Querwände (18) gegen den Trog (12) abgedichtet sind und dadurch die Filtratkammerabschnitte (20) zumindest in ihrer Drehposition unterhalb des Suspensionsniveaus (26) gegeneinander abgedichtet sind.

3. Scheibeneindicker nach Anspruch 1 oder 2, dadurch gekennzeichnet, daß der Filtratablauf (28) in Umfangsrichtung des Trogs (12) langgestreckt ausgebildet ist und durch Unterteilung desselben die einzelnen Ablaufabschnitte (281, 282, 283) unmittelbar aneinander angrenzen.

4. Scheibeneindicker nach einem der Ansprüche 1 bis 3, dadurch gekennzeichnet, daß die umfangslagemäßig gleichartigen Ablaufabschnitte (281, 282, 283) der verschiedenen gegenseitig axial beabstandeten Filtratkammern (40) strömungsmäßig miteinander bzw. mit einem gemeinsamen Ablauf (54, 56) verbunden sind.

5. Scheibeneindicker nach einem der Ansprüche 1 bis 4, gekennzeichnet durch eine Einstellbarkeit der ablaufwirksamen Umfangslänge der Ablaufabschnitte (281, 282, 283) des Filtratablaufs (28).

6. Scheibeneindicker nach Anspruch 5, gekennzeichnet durch eine in Längsrichtung des Eindickers verlaufende sowie in Umfangsrichtung desselben verstellbare und aneinander angrenzende Ablaufabschnitte (281, 282, 283) voneinander trennende Trennwand (34).

7. Scheibeneindicker nach einem der Ansprüche 1 bis 6, dadurch gekennzeichnet, daß die einzelnen Ablaufabschnitte (281, 282, 283) ablaufseitig ventilgesteuert ausgebildet sind.

8. Scheibeneindicker nach einem der Ansprüche 1 bis 7, dadurch gekennzeichnet, daß sich der Filtratablauf (28) über einen möglichst großen Umfangswinkel des Trogs (12) erstreckt.

9. Scheibeneindicker nach Anspruch 8, dadurch gekennzeichnet, daß sich der Filtratablauf (28) maximal über den gesamten unterhalb des Suspensionsniveaus (26) in den Suspensionskammern (40) befindlichen Umfangsbereich des Trogs (12) erstreckt.

10. Scheibeneindicker nach einem der Ansprüche 1 bis 9, dadurch gekennzeichnet, daß die Querwände (18) eben ausgebildet sind und sich zwischen der Welle (14) sowie jeweils zwei Siebfilterscheiben (16) radial sowie axial erstrecken.

11. Scheibeneindicker nach einem der Ansprüche 1 bis 10, gekennzeichnet durch an den radial äußeren Rändern der Querwände (18) befestigte, sich über deren Länge erstreckende und gegen den Trog (12) abdichtende Dichtleisten (44), wie elastische Dichtlippen.

12. Scheibeneindicker nach einem der Ansprüche 1 bis 10, gekennzeichnet durch schmale Spalte zwischen den radial äußeren Rändern der Querwände (18) und dem Trog (12).

13. Scheibeneindicker nach einem der Ansprüche 1 bis 12, dadurch gekennzeichnet, daß der ablaufwirksame Umfangswinkel eines Ablaufabschnitts (281) für Primär- bzw. Trübfiltrat kleiner als derjenige eines in Drehrichtung nachfolgenden Ablaufabschnitts (282) für Klarfiltrat ist.

14. Scheibeneindicker nach einem der Ansprüche 1 bis 13, gekennzeichnet durch mindestens sechs Querwände (18).

15. Scheibeneindicker nach Anspruch 14, gekennzeichnet durch acht Querwände (18).

16. Scheibeneindicker nach Anspruch 14, gekennzeichnet durch zwölf bis 24 Querwände (18).

17. Scheibeneindicker nach einem der Ansprüche 1 bis 16, dadurch gekennzeichnet, daß der ablaufwirksame Umfangswinkel des gesamten Filtratablaufs (28) etwa 90 Grad beträgt.

18. Scheibeneindicker nach einem der Ansprüche 1 bis 17, gekennzeichnet durch eine Bemessung des Umfangswinkels (α) eines jeden Filtratkammer abschnitts (20) unter Berücksichtigung des gesamten Umfangswinkels des Filtratablaufs (28) in der Weise, daß jeder Filtratkammer abschnitt (20) vor dem Erreichen und vor dem Verlassen des Filtratablaufs (28) vollständig unter dem Suspensionsniveau (26) angeordnet ist.

**Claims**

1. A disc concentrator with at least one screen filter disc (16) rotatably mounted in a stationary trough (12) and used for dewatering a suspension of fibrous material and disposed on a substantially horizontal drivable shaft (14), preferably with a number of axially-spaced screen filter discs, each sealed along its periphery against the trough and bounding a suspension chamber (38) open towards the trough and separating it from a filtrate chamber (40) open towards the trough and also bounded thereby, each suspension chamber having a suspension inlet (22) on one side of the trough and a suspension outlet (24) on the opposite side of the trough and each filtrate chamber having a filtrate outlet (28) in the bottom of the trough, characterised in that transverse walls (18) secured to the shaft (14) and/or to the or each screen filter disc (16) divide each filtrate chamber (40) into a number of peripherally distributed filtrate chamber portions (20), and the filtrate outlet (28) at the bottom has at least two outlet portions (281, 282, 283) disposed one behind the other in the peripheral direction of the trough (12) and separated from one another on the outlet side and for filtrate with increasing purity in the direction of rotation of the filtrate-chamber portions.

2. A disc concentrator according to claim 1, characterised in that the transverse walls (18) are sealed against the trough (12), and by this means the filtrate chamber portions (20) are sealed from one another, at least in the position in which they are rotated below the level (26) of the suspension.

3. A disc concentrator according to claim 1 or 2, characterised in that the filtrate outlet (28) is elongate in the peripheral direction of the trough (12) and is subdivided so that the individual outlet portions (281, 282, 283) are directly adjacent one another.

4. A disc concentrator according to any of claims 1 to 3, characterised in that those outlet portions (281, 282, 283) of the various axially-spaced filtrate chambers (40) which occupy an identical peripheral position are connected for flow purposes to one another or to a common outlet (54, 56).

5. A disc concentrator according to any of claims 1 to 4, characterised by a facility for adjusting the peripheral length (which affects the outflow) of the outlet portions (281, 282, 283) of the filtrate outlet (28).

6. A disc concentrator according to claim 5, characterised by a partition wall (34) which extends in the longitudinal direction of the concentrator, is adjustable in the peripheral direction thereof and separates adjacent outlet portions (281, 282, 283) from one another.

7. A disc concentrator according to any of claims 1 to 6, characterised in that the individual portions (281, 282, 283) are valve-controlled on the outlet side.

8. A disc concentrator according to any of claims 1 to 7, characterised in that the filtrate outlet (28) extends over a maximum peripheral angle of the trough (12).

9. A disc concentrator according to claim 8, characterised in that the filtrate outlet (28) extends at most over the entire peripheral region of the trough (12) situated under the level (26) of suspension in the suspension chambers (40).

10. A disc concentrator according to any of claims 1 to 9, characterised in that the transverse walls (18) are flat and extend radially and axially between the shaft (14) and each pair of screen filter discs (16).

11. A disc concentrator according to any of claims 1 to 10, characterised by sealing strips (44), e.g. resilient sealing lips, which are secured to the radial outer edges of the transverse walls (18), extend over the length thereof and provide a seal against the trough (12).

12. A disc concentrator according to any of claims 1 to 10, characterised by narrow gaps between the radially outer edges of the transverse walls (18) and the trough (12).

13. A disc concentrator according to any of claims 1 to 12, characterised in that the peripheral angle (which affects the outflow) of an outlet portion (281) for primary or turbid filtrate is less than the angle of an outlet portion (282) for clear filtrate and following in the direction of rotation.

14. A disc concentrator according to any of claims 1 to 13, characterised by at least six transverse walls (18).

15. A disc concentrator according to claim 14, characterised by eight transverse walls (18).

16. A disc concentrator according to claim 14, characterised by twelve to twenty-four transverse walls (18).

17. A disc concentrator according to any of claims 1 to 16, characterised in that the peripheral angle (affecting the outflow) of the total filtrate outlet (28) is about 90°.

18. A disc concentrator according to any of claims 1 to 17, characterised in that the peripheral angle (a) of each filtrate chamber portion (20) is given a value, considerating the total peripheral angle of the filtrate outlet (28), such that each filtrate chamber portion (20) is completely under the level (26) of suspension before reaching and after leaving the filtrate outlet (28).

**Revendications**

1. Epaississeur à disques, comprenant au moins un disque de filtre-tamis (16) destiné à la déshydratation d'une suspension de matière fibreuse qui est monté de manière tournante dans une auge stationnaire (12), sur un arbre (14) orienté sensiblement dans le sens horizontal et pouvant être entraîné, de préférence une pluralité de disques de filtretamis disposés axialement à distance les uns par rapport aux autres, dont la circonférence est respectivement rendue étanche par rapport à l'auge et qui séparent une chambre de suspension (38) ouverte en direction de l'auge et délimitée par celle-ci d'une chambre de filtrat (40) ouverte en direction de l'auge et délimitée par celle-ci, chaque chambre de suspension présentant sur l'un des côtés de l'auge une arrivée de suspension (22) ainsi que sur le côté opposé de l'auge, un écoulement de suspension (24), et chaque chambre de filtrat présentant dans le fond de l'auge, une sortie de filtrat (28), **caractérisé en ce** que chaque chambre de filtrat (40) est subdivisée par des parois transversales (18) fixées sur l'arbre (14) et/ou les disques de filtre-tamis (16), en plusieurs sections de chambre de filtrat (20) réparties sur la périphérie, et que la sortie de filtrat (28) du côté fond comporte au moins deux sections d'écoulement (281, 282, 283) disposées les unes derrière les autres dans le sens circonférentiel de l'auge (12) et séparées les unes des autres du côté écoulement, pour un filtrat dont la pureté augmente dans le sens de rotation des sections de chambre de filtrat.

2. Epaississeur à disques selon la revendication 1, caractérisé en ce que les parois transversales (18) sont rendues étanches par rapport à l'auge (12) et que de ce fait les sections de chambre de filtrat (20) sont rendues étanches au moins dans leur position angulaire située au-dessous du niveau de suspension (26).

3. Epaississeur à disques selon l'une des revendications 1 ou 2, caractérisé en ce que la sortie de filtrat (28) est allongée dans le sens circonférentiel de l'auge (12) et que, du fait de la subdivision de celle-ci, les différentes sections d'écoulement (281, 282, 283) sont directement contiguës.

4. Epaississeur à disques selon l'une des revendications 1 à 3, caractérisé en ce que les sections d'écoulement (281, 282, 283) des différentes chambres de filtrat (40) disposées axialement à distance les unes par rapport aux autres, identiques en ce qui concerne la position circonférentielle sont raccordées sur le plan de l'écoulement les unes avec les autres et respectivement à un écoulement commun (54, 56).

5. Epaississeur à disques selon l'une des revendications 1 à 4, caractérisé en ce qu'il permet un réglage de la longueur périphérique active des sections d'écoulement (281, 282, 283) de la sortie de filtrat (28)

6. Epaississeur à disques selon la revendication 5, caractérisé en ce qu'il comprend une cloison de séparation (34) s'étendant dans le sens longitudinal de l'épaississeur et pouvant être réglée dans le sens circonférentiel de celui-ci, qui sépare des sections d'écoulement (281, 282, 283) contiguës.

7. Epaississeur à disques selon l'une des revendications 1 à 6, caractérisé en ce que les différentes sections d'écoulement (281, 282, 283) sont commandées par soupapes du côté écoulement.

8. Epaississeur à disques selon l'une des revendications 1 à 7, caractérisé en ce que la sortie de filtrat (28) s'étend sur un angle périphérique de l'auge (12) aussi grand que possible.

9. Epaississeur à disques selon la revendication 8, caractérisé en ce que la sortie de filtrat (28) s'étend au maximum sur la périphérie totale de l'auge (12) située au-dessous du niveau de suspension (26) dans les chambres de suspension (40).

10. Epaississeur à disques selon l'une des revendications 1 à 9, caractérisé en ce que les parois latérales (18) sont planes et s'étendent radialement ainsi qu'axialement entre l'arbre (14) et respectivement deux disques de filtretamis (16).

11. Epaississeur à disques selon l'une des revendications 1 à 10, caractérisé en ce qu'il comprend des baguettes d'étanchéité (44, par exemple des lèvres d'étanchéité élastiques, fixées sur les bords radialement extérieurs des parois transversales (18), s'étendant sur la longueur de celles-ci et assurant l'étanchéité par rapport à l'auge (12).

12. Epaississeur à disques selon l'une des revendications 1 à 10, caractérisé en ce qu'il présente des fentes étroites entre les bords radialement extérieurs des parois transversales (18) et l'auge (12).

13. Epaississeur à disques selon l'une des revendications 1 à 12, caractérisé en ce que l'angle périphérique efficace d'une section d'écoulement (281) pour le filtrat primaire ou trouble est plus petit que celui d'une section d'écoulement pour le filtrat clair (282) qui lui succède dans le sens de rotation.

14. Epaississeur à disques selon l'une des revendications 1 à 13, caractérisé en ce qu'il comprend au moins six parois transversales (18).

15. Epaississeur à disques selon la revendication 14, caractérisé en ce qu'il comprend huit parois transversales (18).

16. Epaississeur à disques selon la revendication 14, caractérisé en ce qu'il comprend 12 à 24 parois transversales (18).

17. Epaississeur à disques selon l'une des revendications 1 à 16, caractérisé en ce que l'angle périphérique efficace de l'ensemble de la sortie de filtrat (28) est d'environ 90 degrés.

18. Epaississeur à disques selon l'une des revendications 1 à 17, caractérisé en ce que l'angle périphérique ($\alpha$) de chaque section de chambre de filtrat (20) est choisi en tenant compte de l'angle périphérique total de la sortie de filrat (28), de telle façon que, avant d'atteindre et avant de quitter la sortie de filtrat (28), chaque section de chambre de filtrat (20) se situe entièrement au-dessous du niveau de suspension (26).

*Fig. 1*

Fig. 2

Fig. 3